# EUROPEAN PATENT SPECIFICATION

(11) **EP 2 320 183 B1**
(45) Date of publication and mention of the grant of the patent: **24.08.2016**
(21) Application number: 09794459.9
(22) Date of filing: 08.07.2009
(51) Int. Cl.: F26B 5/06, F26B 17/10, A23L 3/44, F26B 21/00

(54) **FREEZE-DRYING DEVICE**
GEFRIERTROCKNUNGSVORRICHTUNG
DISPOSITIF DE LYOPHILISATION

(30) Priority: 10.07.2008 JP 2008180122
(43) Date of publication of application: 11.05.2011
(73) Proprietor: Ulvac, Inc., Chigasaki-shi Kanagawa 253-8543 (JP)
(72) Inventor: ITOU, Masaki, Chigasaki-shi Kanagawa 253-8543 (JP); NAKAMURA, Kyuzo, Chigasaki-shi Kanagawa 253-8543 (JP); KATO, Takeo, Chigasaki-shi Kanagawa 253-8543 (JP); ITOU, Katsuhiko, Chigasaki-shi Kanagawa 253-8543 (JP); KINOSHITA, Takao, Chigasaki-shi Kanagawa 253-8543 (JP)
(74) Representative: D Young & Co LLP
(86) International application number: PCT/JP2009/062416
(87) International publication number: WO 2010/005015

(56) References cited:
- GB-A- 727 918
- JP-A- 2005 168 904
- JP-A- 2006 090 671
- JP-B- 42 009 719
- JP-B- 49 042 108
- US-A- 3 319 344
- US-A- 3 431 655
- US-A1- 2002 050 072

## Description

### Technical Field

The present invention relates to a freeze-drying apparatus to inject a raw material fluid into a vacuum to be frozen by itself.

### Background Art

In an injection-type freeze-drying apparatus, a raw material fluid is injected in a vacuum chamber, the raw material fluid being obtained by dissolving or dispersing a raw material for a medical product, a food product, a cosmetic product, or the like in a solvent or a disperse medium. In the above-mentioned injection process, the solvent takes heat from the raw material due to latent heat of vaporization thereof, and thus the raw material is frozen and dried. At this time, the raw material is formed into fine particles, and then is collected in a collector provided in a lower portion of the vacuum chamber. Further, in order to promote the above-mentioned drying action, the raw material is heated by a heater provided to the collector.

For example, Patent Document 1 described below discloses the following method. Specifically, in the method, a raw material is injected through narrow holes to form fluid columns in a vacuum chamber. Then, the fluid columns are frozen by themselves at a predetermined height position, and hence fine raw material fluid particles are dispersed in a mist form.

### [Cited Document]

### [Patent Document]

Patent Document 1: Japanese Patent Application Laid-open No. 2006-90671 (paragraph [0026], Fig. 2)
US 3 319 344 A relates to freeze drying liquid foods.

### Disclosure of the Invention

### Problem to be solved by the Invention

In the injection-type freeze-drying apparatus, it is desirable to increase a processing capacity. In this case, it is useful to provide a plurality of injection holes for the raw material fluid.

However, in the case where the plurality of injection holes for the raw material fluid are provided, it is necessary to cause the raw material fluid to be evenly injected through the respective injection holes. That is, if an injection condition is varied depending on an injection position of the raw material fluid, there is a fear that a height position where the raw material particles, which have been frozen by themselves in a lower end of the fluid columns, are dispersed in the mist form may be varied. The variation of the above-mentioned self-freezing position inhibits a stable self-freezing action of the respective fluid columns, and leads to a variation in a particle size of the raw material particles.

In view of the above-mentioned circumstances, it is an object of the present invention to provide a freeze-drying apparatus capable of achieving an increase of a processing capacity without causing the variation of the particle diameter.

### Means for solving the Problem

A freeze-drying apparatus according the present invention includes a vacuum chamber capable of being exhausted and an injector.

The injector includes a tube member provided to the vacuum chamber and a nozzle mounted to the tube member and including a plurality of injection holes open to an inside of the tube member. The injector injects a raw material fluid, which is introduced into the tube member, from the nozzle to the vacuum chamber.

The nozzle is a plate-shaped member, and the injection holes are through holes formed at a plurality of positions in a surface of the plate-shaped member. A plurality of injectors is provided to the vacuum chamber.

The plurality of injectors includes a first injector including a first nozzle provided with a plurality of first injection holes each having a first hole diameter, and a second injector including a second nozzle provided with a plurality of second injection holes each having a second hole diameter different from the first hole diameter.

### Brief Description of Drawings

[Fig. 1] A schematic configuration view of a freeze-drying apparatus according to an embodiment not forming part of the present invention.
[Fig. 2] A view showing a configuration of an injector constituting the freeze-drying apparatus of Fig. 1.
[Figs. 3] Plan views each showing a configuration example of a nozzle constituting the injector.
[Fig. 4] A schematic configuration view of main parts of a freeze-drying apparatus according to an embodiment of the present invention.
[Fig. 5] A schematic configuration view of main parts of a freeze-drying apparatus according to another embodiment of the present invention. Best Mode(s) for Carrying Out the Invention

A freeze-drying apparatus according to the present invention includes a vacuum chamber capable of being exhausted and an injector.

The injector includes a tube member provided to the vacuum chamber and a nozzle mounted to the tube member and including a plurality of injection holes open to an inside of the tube member. The injector injects a raw material fluid, which is introduced into the tube member, from the nozzle to the vacuum chamber.

In the above-mentioned freeze-drying apparatus, the raw material fluid injected through the respective injection holes of the nozzle forms independent fluid columns within the vacuum chamber, and raw material particles frozen by themselves at a predetermined height position are dispersed in a mist form. In this case, the respective injection holes are each formed so as to be open to the inside of the tube member, and hence the raw material fluid is injected through the respective injection holes at the same injection pressure. With this, the respective fluid columns are frozen by themselves at the substantial same height position, and hence adjacent fluid columns are prevented from influencing to each other. Thus, according to the above-mentioned freeze-drying apparatus, it is possible to achieve an increase of the processing capacity without causing a variation of the particle diameter.

The nozzle is a plate-shaped member, and the injection holes are constituted by through holes formed at a plurality of positions in a surface of the plate-shaped member.

With this, it is possible to inject the raw material fluid from the respective injection holes into the vacuum chamber under the same injection condition. Further, it is possible to simplify the configuration of the nozzle, and to easily form the injection holes each having a desired hole diameter.

The particle size (particle diameter) of the raw material particles greatly depends on the size (hole diameter) of each of the injection holes. Thus, the size of each of the injection holes can be appropriately set depending on a particle size of each of the raw material particles to be produced. Specifically, the particle size of each of the injection holes can be set to be from 50 µm to 500 µm.

The plurality of through holes can be formed symmetrically with respect to a center of the plate-shaped member.

With this, it is possible to form the fluid columns at the positions symmetrical with respect to the center of the nozzle so as to extend into the vacuum chamber. At the same time, it is possible to freeze-dry the raw material particles without mutual interference between the fluid columns.

A plurality of injectors is provided to the vacuum chamber.

With this, it is possible to achieve a further increase of the processing capacity.

The plurality of injectors includes a first injector and a second injector.

The first injector includes a first nozzle provided with a plurality of first injection holes each having a first hole diameter. The second injector includes a second nozzle provided with a plurality of second injection holes each having a second hole diameter different from the first hole diameter.

With this, it is possible to produce the raw material particles having different particle sizes within the same apparatus.

The freeze-drying apparatus including the first injector and the second injector, which have different hole diameters of the injection holes, may further include a first feeding channel, a second feeding channel, and a switching means.

The first feeding channel feeds the raw material fluid to the first injector. The second feeding channel feeds the raw material fluid to the second injector. The switching means switches a feeding of the raw material fluid through the first feeding channel and a feeding of the raw material fluid through the second feeding channel.

With this, it is possible to produce the raw material particles of the different kinds having different particle sizes by use of the same apparatus. Further, it is possible to easily switch the injectors to be used.

The above-mentioned freeze-drying apparatus may further include, within the vacuum chamber, a cooling surface to collect solvent components vaporized of the raw material fluid.

With this, it is possible to achieve an enhancement of the drying ability of the raw material particles within the vacuum chamber, which can greatly contribute to the increase of the processing capacity.

In addition, the above-mentioned freeze-drying apparatus may further include, within the vacuum chamber, a heating surface to receive and heat-dry frozen particles of the raw material fluid injected from the injector.

With this, it is possible to achieve an enhancement of the drying ability of the raw material particles within the vacuum chamber, which can greatly contribute to the increase of the processing capacity.

Hereinafter, embodiments of the present invention will be described with reference to the drawings.

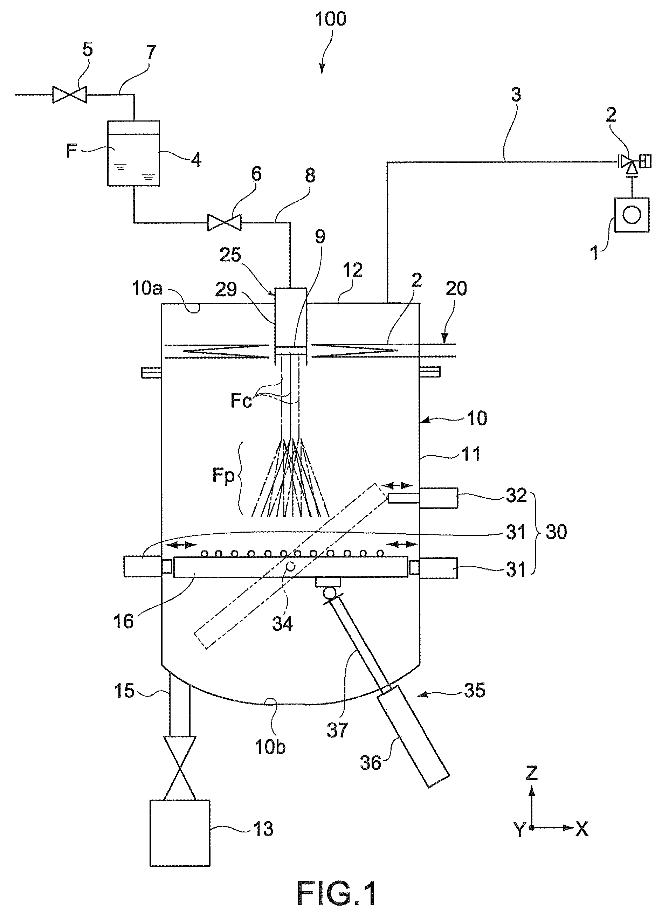

Fig. 1 is a schematic view showing a freeze-drying apparatus according to an embodiment not forming part of the present invention.

A freeze-drying apparatus 100 includes: a container 4 to store a raw material fluid F; a freezing chamber 10 being a vacuum chamber; a vacuum pump 1 for exhausting the freezing chamber 10; and an injector 25 to inject the raw material fluid F stored in the container 4 into the freezing chamber 10.

Typically, the freezing chamber 10 has a cylindrical shape. The freezing chamber 10 includes: a main body 11; and a lid body 12 provided to be attachable to the main body 11. When the lid body 12 is attached to the main body 11, a top surface 10a is formed in the freezing chamber 10. Further, the freezing chamber 10 includes a bottom surface 10b arranged to be opposed to the above-mentioned top surface 10a. A degree of vacuum within the freezing chamber 10 can be controlled in a range of from 0.1 to 500 Pa, for example.

The raw material fluid F is one in a liquid form that is obtained by dissolving or dispersing fine powder of a raw material for a medical product, a food product, a cosmetic product, or the like in a solvent or a disperse medium. Here, the raw material fluid F includes one classified between a solid and liquid, that has a relatively large viscosity. In the following description, the description will be made of a case where an aqueous solution is used as a typical example of the raw material fluid F, that is, a case where the solvent is water.

To the container 4, there is connected a gas-feeding tube 7 for feeding gas from a gas source (not shown) into the container 4. Nitrogen, argon, and other inert gas may be used as the gas. To the container 4, there is connected a raw material fluid-feeding tube 8 for feeding, due to a pressure of the gas fed from the gas-feeding tube 7, the raw material fluid F in the container 4 into the freezing chamber 10. To the gas-feeding tube 7 and the raw material fluid-feeding tube 8, there are respectively connected on-off valves 5 and 6. With this structure, the start and the stop for feeding the gas and the raw material fluid F or a flow rate thereof and the like are controlled.

An exhaust tube 3 is connected between the vacuum pump 1 and the freezing chamber 10. The exhaust tube 3 is provided with an exhaust valve 2.

For example, the injector 25 is provided on an upper portion of the freezing chamber 10. The injector 25 includes a tube member 29 and a nozzle 9. The tube member 29 is connected to the raw material fluid-feeding tube 8. The nozzle 9 is mounted to the tube member 29.

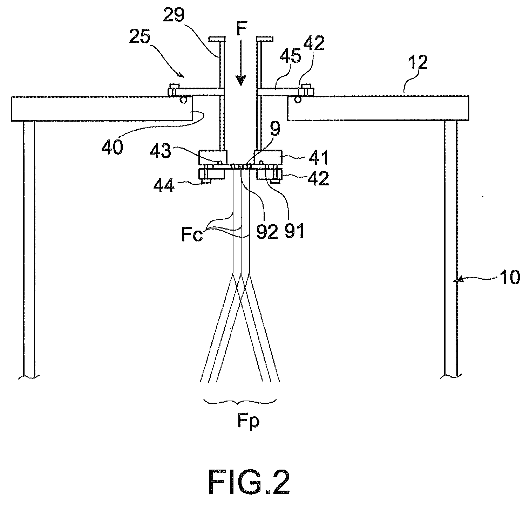

Fig. 2 is a configuration example showing the details of the injector 25. A cross-sectional shape of the tube member 29 is typically circular. To a tip of the tube member 29, which extends into an inside of the freezing chamber 10, there is mounted a support ring 41 for supporting the nozzle 9. The nozzle 9 is sandwiched between the support ring 41 and a fixation ring 42, and is fixed by fastening members 44. Between the support ring 41 and the nozzle 9, a sealing member (O-ring) 43b is arranged.

The tube member 29 is inserted into a mounting hole 40 formed in a center portion of the lid body. The tube member 29 is fixed through a support member 45 to the lid body 12. Between the support member 45 and the lid body 12, a sealing member (O-ring) 43a is arranged.

The nozzle 9 is formed of a plate-shaped member 91 made of metal such as stainless steel. Although the shape of the plate-shaped member 91 is typically a disk shape, a rectangular shape is also possible. A plurality of through holes are formed in a surface of the plate-shaped member 91, and those through holes constitute injection holes 92a for the raw material fluid. Typically, each of the injection holes 92 has a circular shape. A size (hole diameter) of each of the injection holes 92 is appropriately set depending on a particle size of each of the raw material particles to be produced. For example, the size (hole diameter) of each of the injection holes 92 is set to be from 50 µm to 500 µm.

When the raw material fluid F is fed to the injector 25, the raw material fluid F is injected through the tube member 29 and the nozzle 9 into the inside of the freezing chamber 10. The respective injection holes 92 are arranged in a cross-section of a flow path of the tube member 29 in such a manner that the respective injection holes 92 are open to an inside of the tube member 29. Thus, from the respective injection holes 92, the raw material fluid F is injected at the same pressure.

When the raw material fluid F is injected through the respective injection holes 92, the raw material fluid F forms fluid columns Fc straightly extending toward a bottom portion of the freezing chamber 10. A length of each of the fluid columns Fc depends on the kind of the raw material fluid F, the hole diameter of each of the injection holes 92, the injection pressure through each of the injection holes 92, the pressure within the freezing chamber 10, and the like. For example, in a case where the raw material fluid is mannitol solution, the hole diameter of each of the injection holes is set to 150 µm, the injection pressure is set to 0.5 MPa, and the inner pressure of the freezing chamber is set to 50 Pa, the fluid columns Fc each having a length of about 400 mm are formed.

The raw material fluid forming the fluid columns Fc is vaporized and dried within the freezing chamber 10, and is dispersed in a mist form at a lower end of the fluid columns Fc. The frozen particles Fp, which have been dispersed in the mist form, are deposited on a shelf 16 arranged in a lower side thereof. The frozen particles Fp each has a particle size depending on the hole diameter of the injection holes 92.

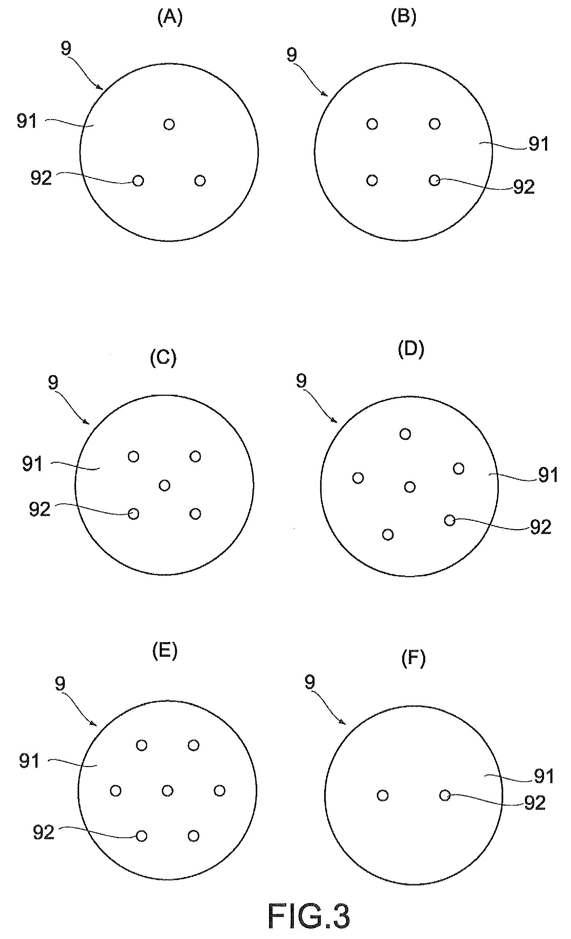

Figs. 3(A) to (F) are plan views each showing a configuration example of the nozzle 9. As shown in Figs. 3(A) to (F), the injection holes 92 are arranged in the surface of the plate-shaped member 91, and the number of the injection holes 92 ranges from 2 to 7 or more. Further, the respective injection holes 92 can be formed symmetrically with respect to the center of the plate-shaped member 91. In particular, in the configuration examples shown in Figs. 3(C) to (E), the injection holes 92 are arranged at equiangular intervals so as to surround the center portion of the plate-shaped member 91 and the circumstance thereof. With this, the fluid columns Fc extending from the respective injection holes 92 can be formed at positions symmetrical with respect to the nozzle 9.

With reference to Fig. 1, the freeze-drying apparatus 100 includes the shelf 16 and a vibration mechanism 30. The shelf 16 is arranged within the freezing chamber 10. The vibration mechanism 30 vibrates the shelf 16. On the shelf 16, the raw material frozen when the raw material fluid F is injected from the nozzle 9 is deposited.

The vibration mechanism 30 is constituted, for example, by a plurality of plunger-type vibration generators 31 and 32. For a power source for each of the vibration generators 31 and 32, a magnetic force or an air pressure is used. Each of the vibration generators 31 and 32 is, for example, fixed to the freezing chamber 10 so that the plungers thereof abut against a peripheral portion of the shelf 16.

To the shelf 16, there is connected a tilt mechanism 35 to rotate the shelf 16 about a predetermined axis, for example, a rotational axis along the Y-axis direction of Fig. 1, to thereby cause the shelf 16 to be tilted. The tilt mechanism 35 includes, for example, a rod 37 and a cylinder 36. The rod 37 is connected to a back surface of the shelf 16. The cylinder 36 causes the rod 37 to be extended or retracted. The cylinder 36 is provided below the bottom portion of the freezing chamber 10. Typically, the shelf 16 has a circular shape as seen in a plan view (seen in the Z-axis direction). However, the shelf 16 may have a rectangular shape.

It should be noted that although not shown, in a rotational portion of the shelf 16, for example, an air bearing or a magnetic levitation system may be used. With this, it is possible to rotate the shelf 16 in a non-sliding manner.

The vibration generators 31 operate when the shelf 16 is held in a horizontal state. The vibration generator 32 operates when the shelf 16 is tilted by the tilt mechanism 35. For example, two vibration generators 31 are provided. One vibration generator 31 may be provided or three or more vibration generators 31 may be provided. A plurality of vibration generators 32 may be similarly provided.

The shelf 16 is provided with a heating/cooling mechanism (not shown). For the heating/cooling mechanism, for example, there is used a system of circulating a liquid-phase medium in an inside of the shelf 16. As a heating mechanism for the liquid-phase medium, a resistive-heating-type heater such as a sheath heater is used. Further, a cooling mechanism for the liquid-phase medium, there is used a system of circulating the liquid-phase medium within a cooler which has been cooled with a coolant, to thereby performing a cooling. Further, the resistive-heating-type heater such as the sheath heater may be used as the heating mechanism to directly heat the shelf 16. Otherwise, a Peltier device may be used as the cooling mechanism to directly cool the shelf 16. The heating mechanism heat-dries the frozen particles Fp deposited on the shelf 16. In this case, the shelf 16 constitutes a heating surface on which the frozen particles Fp are received and heat-dried.

The freeze-drying apparatus 100 includes a cold trap 20. The cold trap 20 serves as a collection mechanism to collect a vapor, which is vaporized or sublimed from the raw material fluid F, in the freezing chamber 10.

Typically, the cold trap 20 includes a tube through which a cooling medium flows. In the cold trap 20, for example, there is used a cooling system in which the liquid-phase medium circulates through the tube, or a cooling system using a phase change of the coolant due to the circulation of the coolant. Typically, in the liquid-phase circulation cooling system, a cooling temperature is set to -60°C or less. In the coolant-phase-change system, the coolant providing a cooling temperature of -120°C or less is even used. A typical example of the liquid-phase medium includes silicone oil.

The cold trap 20 is arranged so as to surround the injector 25. An outer surface of the cold trap 20 constitutes a cooling surface to collect solvent components of the raw material fluid F, the solvent components being vaporized within the freezing chamber 10.

The shelf 16 is arranged at a height position closer to the bottom surface 10b than the top surface 10a of the freezing chamber 10. Further, the cold trap 20 is arranged at a height position closer to the top surface 10a as compared to the shelf 16 arranged at the above-mentioned height position. A height h1 is, for example, 1 m or more, the height h1 extending from a deposition surface of the shelf 16 (upper surface of shelf 16), on which the raw material is deposited, to the cold trap 20. However, depending on process conditions, the height h1 may be smaller than 1 m. The process conditions includes, for example, the kind of the raw material, the flow rate of the raw material fluid F flowing out of the nozzle 9, the degree of vacuum within the freezing chamber 10, and the thermal process temperature for the shelf 16.

A collection container 13 to collect the raw material after freeze-dried is connected to a bottom portion of the freezing chamber 10 through a collection channel 15.

A control portion (not shown) controls the respective operations of the exhaust valve 2, the vacuum pump 1, the on-off valves 5 and 7, the rotation of the shelf 16, the vibration of the shelf 16, and the like.

The operation of the freeze-drying apparatus thus configured will be described.

When the exhaust valve 2 is opened and the vacuum pump 1 is actuated, the pressure within the freezing chamber 10 is lowered so that the pressure within the freezing chamber 10 is maintained in a predetermined degree of vacuum. The shelf 16 is held in the horizontal state as shown in Fig. 1.

When the on-off valves 5 and 6 are opened, the raw material fluid F is fed to the injector 25 due to the gas pressure. Then, from the nozzle 9 into the freezing chamber 10, the raw material fluid F is injected. In some cases, the raw material fluid F may be previously cooled before fed into the freezing chamber 10.

The raw material fluid F injected through the nozzle 9 forms the straight fluid columns Fc halfway. The fluid columns Fc are those in a liquid form containing moisture of the solvent. After the middle of the falling of raw material fluid, the moisture is vaporized or sublimed. Due to an endothermic reaction at the above-mentioned time, the raw material is frozen. The raw material is frozen, that is, the vapor is separated from the raw material, and hence the raw material is dried. As a result, the raw material is formed into the frozen particles Fp having the particle size depending on the hole diameter of the injection holes 92.

At least during the injection of the raw material fluid F, the vapor is collected by the cold trap 20. During the injection of the raw material fluid, the shelf 16 is cooled by the cooling mechanism. With this, the freezing action of the raw material is promoted, and hence the productivity of the particles is increased. The temperature of the deposition surface of the shelf 16, which is lowered by the cooling mechanism, is, for example, set to -25 to 0°C (0°C,-15°C, -20°C, -22.5°C, -25°C, or another temperature).

Further, during the injection of the raw material fluid F, after the injection of the raw material fluid F, or for a time period covering the start to the termination of the injection of the raw material fluid F, the shelf 16 is vibrated in a horizontal direction due to the actuation of the vibration generators 31. With this, the frozen particles Fp deposited on the shelf 16 are evenly diffused on the shelf 16 in such a manner that a deposition thickness thereof becomes smaller or a single layer thereof is formed. With this, a freezing efficiency and a drying efficiency of individual particles are promoted.

When the injection of the raw material fluid F is terminated, the heating mechanism heats the shelf 16. With this, the drying action of the frozen particles is promoted, and hence the productivity of the frozen particles is increased. The drying process by the heating mechanism is referred to as a heat-drying in order to discriminate this drying process from the drying due to the freezing. The temperature of the deposition surface of the shelf 16, which is lowered by the heating mechanism, is, for example, set to 20 to 50°C (20, 40, 50°C, or another temperature).

When the heat-drying of the frozen particles is terminated, the shelf 16 is tilted by the tilt mechanism 35 as indicated by the two-dot chain line of Fig. 1. Further, due to the actuation of the vibration generator 32, the shelf 16 is vibrated. With this, dried particles (particles after heat-drying is terminated) are collected through the collection channel 15 into the collection container 13 due to its own weight and an acceleration thereof due to the vibration.

As described above, according to this embodiment, the nozzle 9 to inject the raw material fluid F into the freezing chamber 10 includes a plurality of injection holes 92, and hence the productivity of the raw material particles is increased, and it is possible to achieve an increase of the processing capacity.

In this case, the respective injection holes 92 are each formed so as to be open to the inside of the tube member 29, and hence the raw material fluid F is injected through the respective injection holes 92 at the same injection pressure. With this, the respective fluid columns Fc are frozen by themselves at the substantial same height position, and hence adjacent fluid columns are prevented from influencing to each other. That is, there is no possibility that some frozen particles, which have been already frozen by themselves, are dispersed in a region in which the adjacent fluid columns are formed, which inhibits the self-freezing action at a predetermined height position of the fluid columns. Thus, according to the freeze-drying apparatus 100 of this embodiment, it is possible to achieve the increase of the processing capacity without causing the variation of the particle diameter.

Further, the nozzle 9 of this embodiment is formed of the plate-shaped member, and the respective injection holes 92 is constituted by the through holes formed at a plurality of positions in the surface of the plate-shaped member 91. With this, it is possible to inject the raw material fluid from the respective injection holes 92 into the freezing chamber 10 under the same injection condition. Further, it is possible to simplify the configuration of the nozzle 9, and to easily form the injection holes 92 each having a desired hole diameter.

In addition, the respective injection holes 92 are formed symmetrically with respect to the center of the nozzle 9. With this, it is possible to form the fluid columns Fc at the positions symmetrical with respect to the center of the nozzle 9 so as to extend into the freezing chamber 10. At the same time, it is possible to produce the frozen particles Fp of the raw material without mutual interference between the fluid columns Fc.

Further, the freeze-drying apparatus 100 of this embodiment includes, within the freezing chamber 10, the cooling surface (cold trap 20) to collect the vaporized solvent component in the raw material fluid F. With this, it is possible to achieve an enhancement of the drying ability of the raw material particles within the freezing chamber 10, which can greatly contribute to the increase of the processing capacity.

Further, the freeze-drying apparatus 100 of this embodiment includes, within the freezing chamber 10, the heating surface (shelf 16) to receive and heat-dry the frozen particles Fp of the raw material fluid F injected from the injector 25. Also with this, it is possible to achieve an enhancement of the drying ability of the raw material particles within the vacuum chamber, which can contribute to a further increase of the processing capacity.

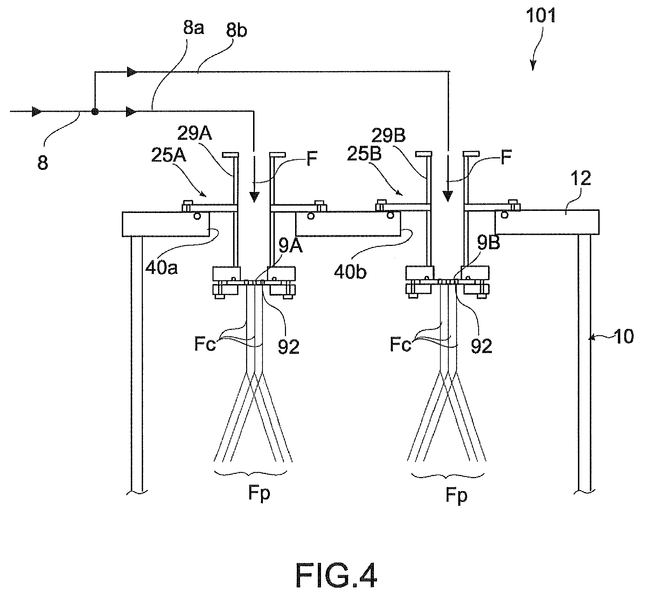

Fig. 4 shows a freeze-drying apparatus according to the invention.

Regarding the freeze-drying apparatus 101 shown in Fig. 4, in the upper portion of the freezing chamber 10, there are arranged two injectors 25A and 25B so as to be adjacent to each other. The injectors 25A and 25B inject the raw material fluid F. In a manner similar to the above-mentioned manner, the respective injectors 25A and 25B are provided into mounting holes 40a and 40b formed in the lid body 12 constituting the upper portion of the freezing chamber 10.

The injectors 25A and 25B have the same configuration, and include tube members 29A and 29B and nozzles 9A and 9B, respectively. The tube members 29A and 29B are connected to branch tubes 8a and 8b branching from the raw material fluid-feeding tube 8, respectively. The nozzles 9A and 9B are mounted to the tips of the tube members 29A and 29B, respectively. The branch tube 8a constitutes a first feeding channel to feed the raw material fluid F to the injector 25A, and the branch tube 8b constitutes a second feeding channel to feed the raw material fluid F to the injector 25B. Each of the nozzles 9A and 9B includes a plurality of injection holes 92. The plurality of injection holes 92 are arranged so as to be open to insides of the tube members 29A and 29B. The injection holes 92 and 92 of the respective nozzles 9A and 9B each have the same hole diameter with respect to each other.

In the freeze-drying apparatus 101 of this embodiment, the raw material fluid F is adapted to be injected from the two injectors 25 into the freezing chamber 10 at the same time. Thus, as compared to the freeze-drying apparatus 100 shown in Fig. 1, it is possible to double the processing capacity.

The number of the provided injectors is not limited to two as described above, and the number of the provided injectors may be further increased. With this, it is possible to achieve a further increase of the processing capacity.

Further, the injection holes 92 and 92 of the nozzles 9A and 9B are set to be different from each other. With this, it is possible to produce the raw material particles of the same kind having different particle sizes at the same time.

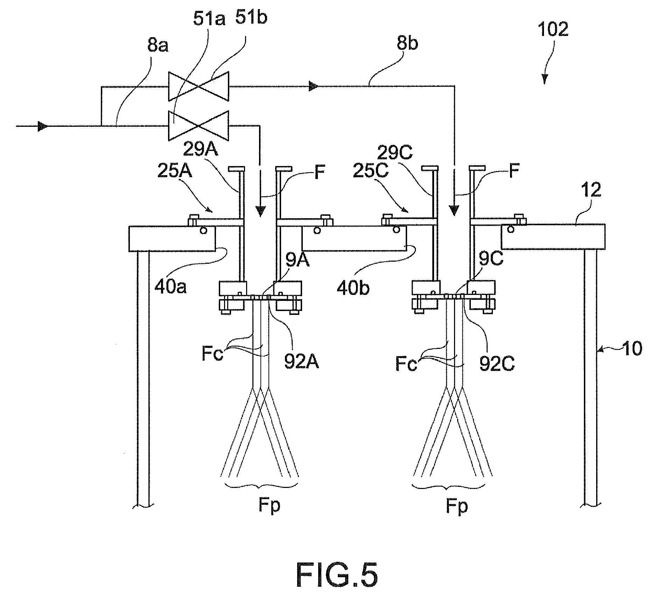

Fig. 5 shows a freeze-drying apparatus according to another embodiment.

Regarding the freeze-drying apparatus 102 shown in Fig. 5, in the upper portion of the freezing chamber 10, there are two injectors 25A and 25C so as to be adjacent to each other. The injectors 25A and 25C inject the raw material fluid F. In a manner similar to the above-mentioned manner, the respective injectors 25A and 25C are provided into the mounting holes 40a and 40b formed in the lid body 12 constituting the upper portion of the freezing chamber 10.

The injectors 25A and 25C includes tube members 29A and 29C and nozzles 9A and 9C, respectively. The tube members 29A and 29C are connected to the branch tubes 8a and 8b branching from the raw material fluid-feeding tube 8, respectively. The nozzles 9A and 9C are mounted to the tips of the tube members 29A and 29C, respectively. The nozzles 9A and 9C include a plurality of injection holes 92A and 92C arranged so as to be open to insides of the tube members 29A and 29C, respectively. The injection holes 92A and 92C of the respective nozzles 9A and 9C have hole diameters different from each other.

The branch tube 8a constitutes a first feeding channel to feed the raw material fluid F to the injector 25A, and the branch tube 8b constitutes a second feeding channel to feed the raw material fluid F to the injector 25C. Further, the branch tubes 8a and 8b are provided with on/off valves 51a and 51b, respectively. The on/off valves 51a and 51b constitute a switching means to switch a feeding of the raw material fluid through the branch tube 8a and a feeding of the raw material fluid through the branch tube 8b.

In the injection-type freeze-drying apparatus, an obtained particle diameter of the raw material particles is determined substantially depending on the size of the injection hole of the nozzle to inject the raw material fluid. A desired size of the raw material particles is varied depending on the kind of the product, and hence the size of the injection hole is changed depending on the kind of the product.

According to this embodiment, a plurality of injectors 25A and 25C having the different hole diameters of the injection holes are provided in advance, and hence it is possible to produce the raw material particles of the various kinds with use of one freezing chamber 10 under on/off control by the on/off valves 51a and 51b. Further, it is possible to easily practice the change of the hole diameter of the injection holes corresponding to the change of the kinds of the raw material particle.

It should be noted that by further increasing the injectors having the different hole diameter of the injection holes and correspondingly adding feeding systems for the raw material fluid, it is possible to further increase the number of the kinds of the raw material particles which can be processed.

Although the embodiments according to the present invention have been described in the above, the present invention is not limited thereto, and various modifications can be made based on the technical idea of the present invention.

For example, although in the above-mentioned embodiments, the nozzle including a plurality of injection holes is mounted to the tip of the tube member, the present invention is not limited thereto. For example, the nozzle may be provided into the inside of the tube member.

Further, the nozzle 9 is not limited to the example in which the nozzle 9 is formed of the plate-shaped member, and the nozzle 9 may be formed of a bulk part having relatively large thickness.

In addition, a vertical section of the injection holes 92 is not limited to be a straight shape, and an appropriate shape change is possible, for example by forming a tapered surface at an inlet end or an outlet end thereof.

In addition, an injection direction in which the raw material fluid is injected through the respective injection holes is not limited to the example in which the respective injection directions for the respective raw material fluids from the respective injection holes are set to be parallel to each other. For example, it is possible that an axis of each of the injection holes is tilted in such a manner that the injection direction from each of the injection holes located on an outer periphery side of the nozzle is tilted toward the center of the nozzle. With this, it is possible to cause the self-freezing position for the raw material fluid injected through each of the injection holes to be concentrated in a predetermined region, and hence the freezing chamber 10 can be prevented from being increased in size. In this case, it is necessary to cause the fluid columns of the raw material fluid injected through the respective injection holes not to interfere with each other.

### Description of Symbols

1... vacuum pump
9, 9A, 9B, 9C... nozzle
10... freezing chamber (vacuum chamber)
13... collection container
16... shelf (heating surface)
20... cold trap (cooling surface)
25, 25A, 25B, 25C... injector
29, 29A, 29B, 29C... tube member
30... vibration mechanism
91... plate-shaped member
92... injection hole
100, 101, 102... freeze-drying apparatus
F...raw material fluid
Fc... fluid column
Fp... frozen particle

## Claims

1. A freeze-drying apparatus, comprising:
a vacuum chamber (10) capable of being exhausted; and
an injector (25) including
a tube member (29) provided to the vacuum chamber, and
a nozzle (9) mounted to the tube member and including a plurality of injection holes (92) open to an inside of the tube member, the injector injecting a raw material fluid, which is introduced into the tube member, from the nozzle to the vacuum chamber, the nozzle being a plate-shaped member (91), the injection holes being through holes formed at a plurality of positions in a surface of the plate-shaped member, **characterized in that**:
a plurality of injectors (25A, 25C) is provided to the vacuum chamber; and
the plurality of injectors includes:
a first injector (25A) including a first nozzle (9A) provided with a plurality of first injection holes (92A) each having a first hole diameter, and
a second injector (25C) including a second nozzle provided with a plurality of second injection holes (92C) each having a second hole diameter different from the first hole diameter.

2. The freeze-drying apparatus according to claim 1, further comprising:
a first feeding channel (8a) to feed the raw material fluid to the first injector;
a second feeding channel (8b) to feed the raw material fluid to the second injector; and
a switching means (51a, 51b) to switch a feeding of the raw material fluid through the first feeding channel and a feeding of the raw material fluid through the second feeding channel.

3. The freeze-drying apparatus according to claim 1, wherein the plurality of through holes are formed symmetrically with respect to a center of the plate-shaped member.

4. The freeze-drying apparatus according to claim 1, further comprising a cooling surface (20) to collect solvent components vaporized of the raw material fluid within the vacuum chamber.

5. The freeze-drying apparatus according to claim 1, further comprising, within the vacuum chamber, a heating surface (16) to receive and heat-dry frozen particles of the raw material fluid injected through the injector.

## Patentansprüche

1. Gefriertrocknungsvorrichtung, umfassend:
eine Vakuumkammer (10), die abgelassen werden kann;
und
eine Einspritzvorrichtung (25), aufweisend:
ein Rohrelement (29), das mit der Vakuumkammer bereitgestellt ist, und
eine Düse (9), die an dem Rohrelement befestigt ist und eine Vielzahl von Einspritzlöchern (92) aufweist, die zu einer Innenseite des Rohrelements offen sind, wobei die Einspritzvorrichtung ein Rohstofffluid einspritzt, das in das Rohrelement von der Düse zur Vakuumkammer eingeleitet wird, wobei die Düse ein plattenförmiges Element (91) ist, wobei die Einspritzlöcher Durchgangslöcher sind, die an einer Vielzahl von Positionen in einer Oberfläche des plattenförmigen Elements ausgebildet sind, **dadurch gekennzeichnet, dass**:
der Vakuumkammer eine Vielzahl von Einspritzvorrichtungen (25A, 25C) bereitgestellt wird; und
die Vielzahl von Einspritzvorrichtungen einschließt:
eine erste Einspritzvorrichtung (25A), die eine erste Düse (9A) aufweist, die mit einer Vielzahl von ersten Einspritzlöchern (92A) bereitgestellt ist, die jeweils einen ersten Lochdurchmesser aufweisen, und
eine zweite Einspritzvorrichtung (25C), die eine zweite Düse aufweist, die mit einer Vielzahl von zweiten Einspritzlöchern (92C) bereitgestellt ist, die jeweils einen zweiten Lochdurchmesser aufweisen, der anders als der erste Lochdurchmesser ist.

2. Gefriertrocknungsvorrichtung nach Anspruch 1, ferner umfassend:
einen ersten Zuführkanal (8a) zum Zuführen des Rohstofffluids zu der ersten Einspritzvorrichtung;
einen zweiten Zuführkanal (8b) zum Zuführen des Rohstofffluids zu der zweiten Einspritzvorrichtung; und
ein Schaltmittel (51a, 51b) zum Umschalten einer Zufuhr des Rohstofffluids durch den ersten Zuführkanal und einer Zufuhr des Rohstofffluids durch den zweiten Zuführkanal.

3. Gefriertrocknungsvorrichtung nach Anspruch 1, wobei die Vielzahl von Durchgangslöchern in Bezug auf eine Mitte des plattenförmigen Elements symmetrisch ausgebildet ist.

4. Gefriertrocknungsvorrichtung nach Anspruch 1, ferner umfassend eine Kühlfläche (20) zum Sammeln von Lösungsmittelbestandteilen, die in dem Rohstofffluid innerhalb der Vakuumkammer verdampft sind.

5. Gefriertrocknungsvorrichtung nach Anspruch 1, ferner umfassend, innerhalb der Vakuumkammer, eine Heizfläche (16) zum Aufnehmen und Wärmetrockengefrieren von Teilchen des Rohstofffluids, das durch die Einspritzvorrichtung eingespritzt wird.

## Revendications

1. Appareil de lyophilisation, comprenant :
une chambre à vide (10) capable d'être évacuée ; et
un injecteur (25), comportant
un organe de tube (29) prévu vers la chambre à vide, et
une buse (9) montée sur l'organe de tube et comportant une pluralité de trous d'injection (92) ouverts vers l'intérieur de l'organe de tube, l'injecteur injectant un fluide de matière première qui est introduit dans l'organe de tube, depuis la buse jusqu'à la chambre à vide, la buse étant un organe en forme de plaque (91), les trous d'injection étant des trous traversants formés au niveau d'une pluralité de positions dans une surface de l'organe en forme de plaque,
**caractérisé en ce que** :
une pluralité d'injecteurs (25A, 25C) est prévue vers la chambre à vide ; et
la pluralité d'injecteurs comporte :
un premier injecteur (25A) comportant une première buse (9A) pourvue d'une pluralité de premiers trous d'injection (92A) ayant chacun un premier diamètre de trou, et
un deuxième injecteur (25C) comportant une deuxième buse pourvue d'une pluralité de deuxièmes trous d'injection (92C) ayant chacun un deuxième diamètre de trou différent du premier diamètre de trou.

2. Appareil de lyophilisation selon la revendication 1, comprenant en outre .
un premier canal d'alimentation (8a) destiné à alimenter le fluide de matière première au premier injecteur ;
un deuxième canal d'alimentation (8b) destiné à alimenter le fluide de matière première au deuxième injecteur ; et
un moyen de commutation (51a, 51b) pour commuter une alimentation du fluide de matière première à travers le premier canal d'alimentation et une alimentation du fluide de matière première à travers le deuxième canal d'alimentation.

3. Appareil de lyophilisation selon la revendication 1, dans lequel la pluralité de trous traversants sont formés symétriquement par rapport à un centre de l'organe en forme de plaque.

4. Appareil de lyophilisation selon la revendication 1, comprenant en outre une surface de refroidissement (20) pour recueillir les constituants solvants vaporisés sur le fluide de matière première à l'intérieur de la chambre à vide.

5. Appareil de lyophilisation selon la revendication 1, comprenant en outre, à l'intérieur de la chambre à vide, une surface de chauffage (16) destinée à recevoir et chauffer à sec les particules congelées du fluide de matière première injecté à travers l'injecteur.
